**Europäisches Patentamt**

**European Patent Office**

**Office européen des brevets**

(19)

(11) Numéro de publication: **0 252 802 B1**

(12)

# FASCICULE DE BREVET EUROPEEN

(45) Date de publication du fascicule du brevet:
27.09.89

(21) Numéro de dépôt: **87401467.3**

(22) Date de dépôt: **25.06.87**

(51) Int. Cl.⁴: **B27C 1/04**, B23Q 9/00

(54) Machine à bois notamment pour la réalisation de cadres ou châssis de fenêtre.

(30) Priorité: **02.07.86 FR 8609617**

(43) Date de publication de la demande:
**13.01.88 Bulletin 88/2**

(45) Mention de la délivrance du brevet:
**27.09.89 Bulletin 89/39**

(84) Etats contractants désignés:
**AT BE CH DE ES GB IT LI LU NL SE**

(56) Documents cités:
**CH-A- 100 246**
**DE-A- 2 558 226**
**DE-C- 890 864**
**FR-A- 2 051 968**
**FR-E- 9 107**
**US-A- 2 639 741**
**US-A- 3 380 492**

(73) Titulaire: **Badonnel, René, Rue des Costelles,**
**F-88460 Docelles(FR)**

(72) Inventeur: **Badonnel, René, Rue des Costelles,**
**F-88460 Docelles(FR)**

(74) Mandataire: **Robert, Jean-Pierre et al, CABINET**
**BOETTCHER 23, rue la Boétie, F-75008 Paris(FR)**

ACTORUM AG

EP 0 252 802 B1

## Description

La présente invention concerne une machine à bois dans laquelle la pièce de bois de forme généralement allongée est usinée par un outil de forme, sur au moins l'une de ses faces, tournant autour d'un axe transversal à la direction longitudinale de la pièce.

Actuellement dans ce type de machines, le mouvement relatif de la pièce par rapport à l'outil est assuré manuellement en glissant la pièce sous l'outil le long d'un guide constitué par une table horizontale et une paroi verticale contre lesquelles, dans l'angle qu'elles forment, la pièce est appliquée.

L'un des inconvénients de ces machines connues réside dans la manipulation manuelle des pièces qui est source de nombreux accidents. En outre, l'usinage d'une série de pièces sur deux faces par exemple, nécessite de procéder à l'usinage de l'une des faces de toutes les pièces puis de procéder au réglage des guides par rapport à l'outil pour réaliser l'usinage de l'autre face, entraînant l'obligation d'un stockage intermédiaire et la manutention de ce stock de la sortie de la machine vers l'entrée pour la seconde opération d'usinage.

L'invention entend pallier ces inconvénients en proposant une machine dans laquelle la pièce à usiner est maintenue fixe sur une table réglable par rapport à l'outil, lequel est déplaçable le long de guides parallèles fixes. Il suffit alors de mettre en place la pièce sur son support, la machine possédant les moyens d'entraînement et les moyens de commande nécessaires pour les placer correctement par rapport à l'outil, pour dégager l'outil après une première opération d'usinage et pour replacer la pièce dans une seconde position par rapport à l'outil pour une autre opération d'usinage, ce cyle étant effectué sans intervention de l'opérateur. La pièce, issue de la machine, est alors prête à être convoyée vers un autre poste de l'usine où elle sera, par exemple, assemblée aux autres éléments constitutifs du cadre, de la fenêtre, ou du porte fenêtre avec lesquels elle doit coopérer.

Plus précisément, l'invention a pour objet une machine à bois comportant un outil d'usinage rotatif autour d'un axe parallèle à une table de support de la pièce à usiner, la pièce et l'outil étant animés d'un mouvement rotatif sensiblement perpendiculaire à l'axe susdit.

Selon l'une des caractéristiques principales de l'invention, cette machine comporte:
- un bâti fixe,
- un premier chariot supérieur monté à coulissement sur des guides du bâti parallèles à une première direction longitudinale horizontale et équipé sur sa face inférieure de l'outil susdit,
- un second chariot inférieur, monté à coulissement sur des guides du bâti parallèles à une seconde direction transversale horizontale et pourvu à sa partie supérieure de la table susdite,
- des moyens de réglage en hauteur de la table par rapport au second chariot,
- des moyens de fixation d'une pièce de bois sur la surface supérieure de la table,
- des moyens d'entraînement de l'outil embarqués sur le premier chariot,
- des moyens d'entraînement du déplacement du second chariot par rapport au bâti, et les moyens de réglage en hauteur de la table sont constitués par deux coulisseaux montés glissant sur des guides inférieurs du second chariot parallèles à la direction longitudinale susdite et possédant chacun une face supérieure inclinée coopérant avec l'un des côtés d'une pièce en V solidaire de la table, et par deux vis symétriques parallèles aux guides susdits, formant les arbres de sortie opposés d'un renvoi d'angle central dont l'arbre d'entrée est perpendiculaire auxdits guides, chacune de ces vis coopérant avec le coulisseau correspondant, à la manière d'un système vis-écrou pour éloigner ou rapprocher l'un ou l'autre desdits coulisseaux le long des guides.

En outre, le déplacement du chariot inférieur par rapport au bâti est assuré par une vis fixe en translation, parallèle aux guides transversaux susdits, coopérant avec le chariot inférieur à la manière d'un système vis-écrou.

On mentionnera également que l'entraînement du chariot supérieur le long de ses guides peut être assuré par tout moyen connu et notamment par un pignon moteur solidaire du chariot coopérant avec une crémaillère fixe solidaire du bâti.

Par ailleurs, le second chariot comporte une paroi verticale fixe, adjacente à ladite table, de hauteur supérieure à l'amplitude du mouvement vertical de la table et de longueur égale à celle de la table, à l'extrémité duquel est prévu un dispositif auxiliaire de soutien de la pièce à usiner, escamotable entre une position de repos située audelà de la surface verticale utile de la paroi par rapport à la table et une position de travail dans laquelle le support maintient une extrémité débordante de la pièce de bois écartée de ladite paroi fixe.

Enfin, pour permettre un retournement ou une rotation automatique de la pièce de bois, le second chariot comporte une console de support d'une pince rotative autour d'un axe longitudinal et mobile entre une position basse inférieure à la surface de la table en position haute et une position de travail au niveau de l'extrémité de la pièce de bois soutenue par le dispositif auxiliaire de support.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels:

- la figure 1 est une vue schématique et partielle en perspective d'une machine conforme à l'invention,
- la figure 2 illustre par une demi-coupe partielle le mécanisme de réglage en hauteur de la table,
- la figure 3 est une vue schématique de bout du chariot inférieur équipé de la table,
- les figures 4 et 5 illustrent par deux vues extérieures orthogonales le mécanisme de retournement mis en oeuvre sur le second chariot.

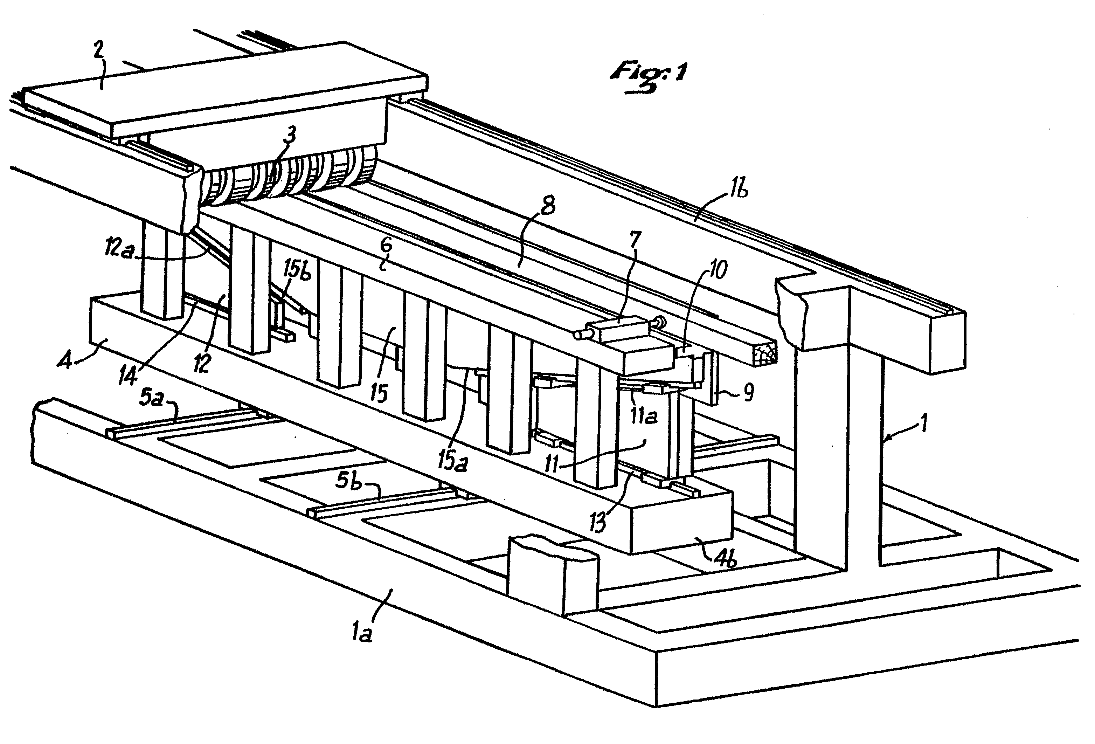

En se reportant tout d'abord à la figure 1 on voit une représentation schématique d'une machine selon l'invention dans laquelle un bâti 1 présente une structure inférieure 1a formant le socle de la machine et une structure supérieure 1b constituant un banc de guidage longitudinal pour un premier chariot supérieur 2. Le chariot 2 porte un outil d'usinage rotatif 3 autour d'un arc transversal à la direction longitudinale du banc. Cet outil est disposé sous le chariot et son entraînement en rotation autour de son axe est assuré par un moteur non représenté qui peut être aisément fixé sur la face supérieure du chariot et dont l'arbre de sortie est relié de manière simple par une courroie d'entraînement s'étendant dans un plan vertical pour coopérer avec une poulie menée calée sur l'arbre de l'outil.

Le déplacement du chariot 2 le long du banc 1b peut être assuré par tout moyen connu tel qu'une vis mère rotative s'étendant le long du bâti. On préférera cependant un dispositif d'entraînement par pignon crémaillère, le pignon étant porté par le chariot et calé sur l'arbre de sortie d'un moteur également embarqué et fixé sur le chariot. La crémaillère est quant à elle portée par le bâti. Ces moyens d'entraînement n'ont pas été représentés au dessin pour des raisons de clarté.

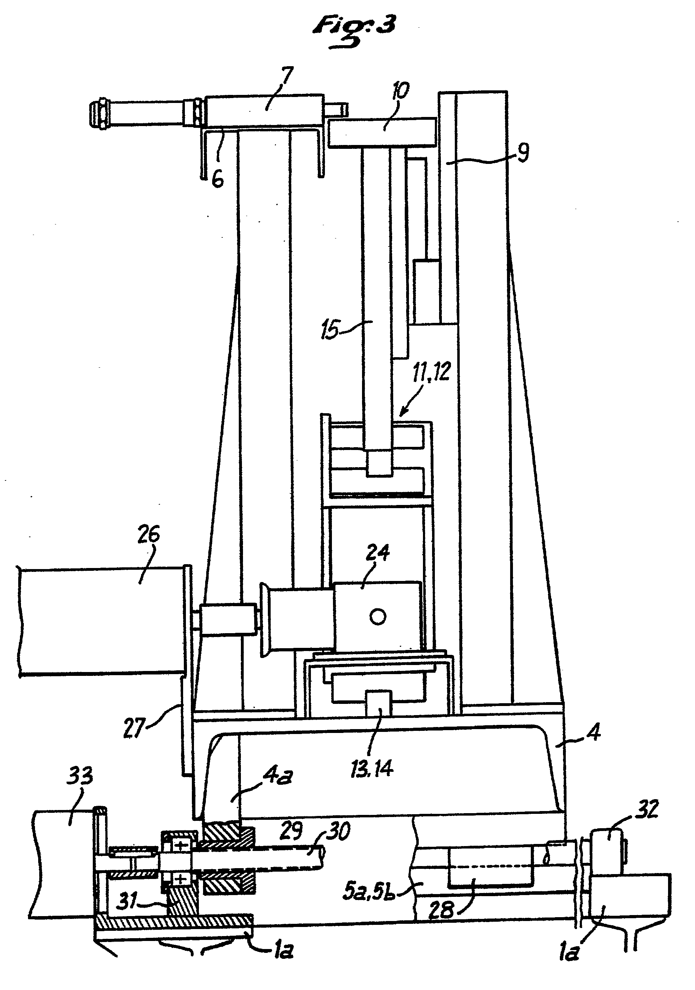

Entre le socle 1a et le banc 1b, la machine comporte un second chariot 4 inférieur susceptible d'être dé placé le long de guides 5a et 5b transversaux par l'intermédiaire d'un dispositif d'entraînement représenté à la figure 3. Ce chariot 4 comporte une superstructure fixe dont une partie 6 constitue un support pour des vérins 7 de fixation de la pièce à usiner 8 (ici un montant longitudinal) et une autre partie, transversalement éloignée de la première, constitue une paroi verticale 9 située en regard des vérins 7 et constituant un appui pour la pièce à usiner contre lequel elle est plaquée par les vérins.

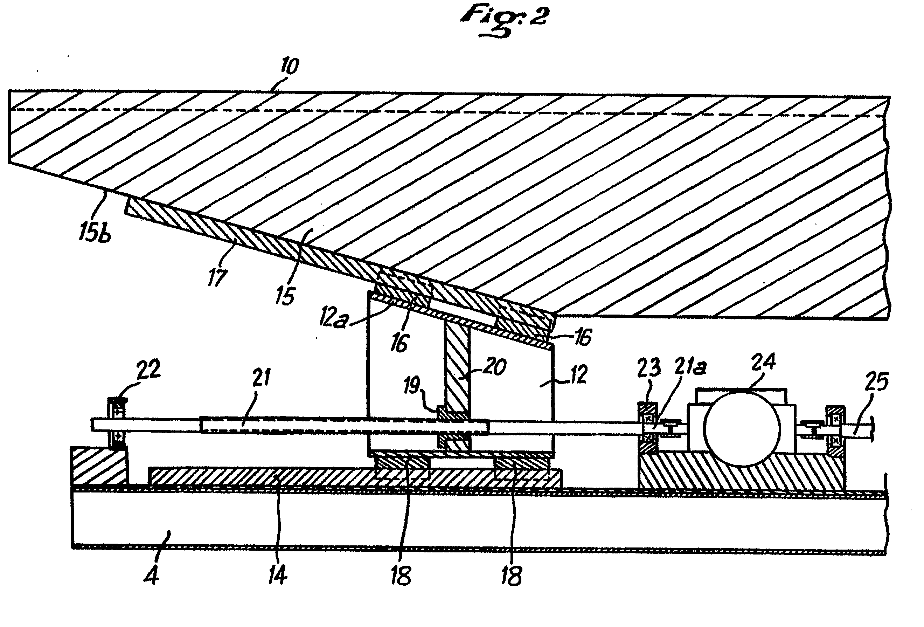

Entre ces deux parties 6 et 9, le chariot 4 porte une table 10 mobile verticalement, parallèlement à elle-même le long de la paroi fixe 9. Le dispositif de déplacement de la table, qui sera décrit plus en détail en regard de la figure 2, comporte deux coulisseaux 11 et 12 déplaçables symétriquement l'un de l'autre le long de guides longitudinaux 13 et 14 portés par le chariot 4, et comportant une face supérieure 11a, 12a en pente coopérant avec les branches 15a et 15b d'une pièce en V 15 solidaire de la surface inférieure de la table 10. On voit donc qu'en rapprochant ou éloignant les coulisseaux, on engendre la montée ou la descente de la table 10 par le jeu des surfaces en pente. On peut,grâce à cette table mobile verticalement, d'une part, régler la profondeur de passe de l'outil et d'autre part, permettre de dégager la pièce par rapport à l'outil en abaissant son niveau. Cette disposition est intéressante pour, comme on le verra par la suite, retourner la pièce si une autre face est à usiner.

On notera par ailleurs que la hauteur de la paroi 9 est supérieure au débattement maximum de la table 10 de manière à toujours constituer au moins une barrière à la pièce quelle que soit la position de la table, évitant ainsi sa chute latérale lors du mouvement vers le bas de la table.

Le déplacement transversal du chariot 4 le long des guides 5a et 5b permet le réglage en position de la pièce par rapport à l'outil qui, de manière connue, comporte plusieurs fraises contiguës permettant de réaliser des usinages de profils différents sur une pièce selon leur position relative.

Sur la figure 2, qui est une vue en demi-coupe schématique de la liaison table 10, chariot 4, on retrouve le coulisseau 12 équipé sur sa face 12a de patins de glissement 16, recevant une garniture 17 solidaire de la branche 15b de la pièce en V 15. A sa partie inférieure le coulisseau 12 porte également des patins de glissement 18 coopérant avec le guide 14 du chariot 4.

Le coulisseau 12 porte un écrou 19 solidaire par exemple d'une de ses parois verticales 20 dans lequel une vis 21 est engagée. La vis 21 est maintenue fixe en translation par rapport au chariot 4 tout en pouvant tourner dans des paliers de soutien 22 et 23. Elle est accouplée en rotation, par son extrémité 21a située dans la zone médiane du chariot 4 à l'un des arbres de sortie d'un dispositif 24 de renvoi d'angle réducteur dont l'arbre d'entrée est solidaire de la sortie d'un moteur visible sur la figure 3. Le coulisseau 11, non représenté sur cette figure, est de construction tout à fait symétrique à celle du coulisseau 12 et coopère avec une seconde vis 25 accouplée à l'autre sortie du renvoi d'angle 24. Si les vis tournent en sens contraire, leur pas sera inversé pour obtenir les mouvement symétriques d'éloignement et de rapprochement des coulisseaux.

Sur la figure 3, qui est une vue schématique en bout du chariot 4 équipé de sa superstructure et de la table 10, on retrouve certains des éléments déjà décrits avec les mêmes références. On voit ainsi que le renvoi d'angle 24 est associé à un moteur 26 fixé par une console 27 sur le chariot 4. A sa base, le chariot 4 comporte des patins de glissement tels que 28 coopérant avec les guides transversaux 5a, 5b que comporte le socle 1a du bâti de la machine. En outre, le chariot 4 porte une extension verticale 4a, dans sa zone médiane, pourvue d'un écrou 29 dans lequel est engagée une vis 30 supportée à rotation par des paliers 31, 32 solidaires du socle 1a. Cette vis 30, arrêtée en translation, est accouplée à l'arbre de sortie d'un groupe moto-réducteur 33 porté par le socle 1a. L'entraînement en rotation de la vis 30 provoque la translation du chariot 4 le long des guides 5a, 5b.

Les moteurs 26 et 33, de même que le moteur d'entraînement en déplacement du chariot supérieur 2, le long du banc 1b, peuvent être associés à des codeurs et être pilotés par un dispositif de commande numérique ou un automate en fonction d'un programme de séquences d'opérations prédéterminées.

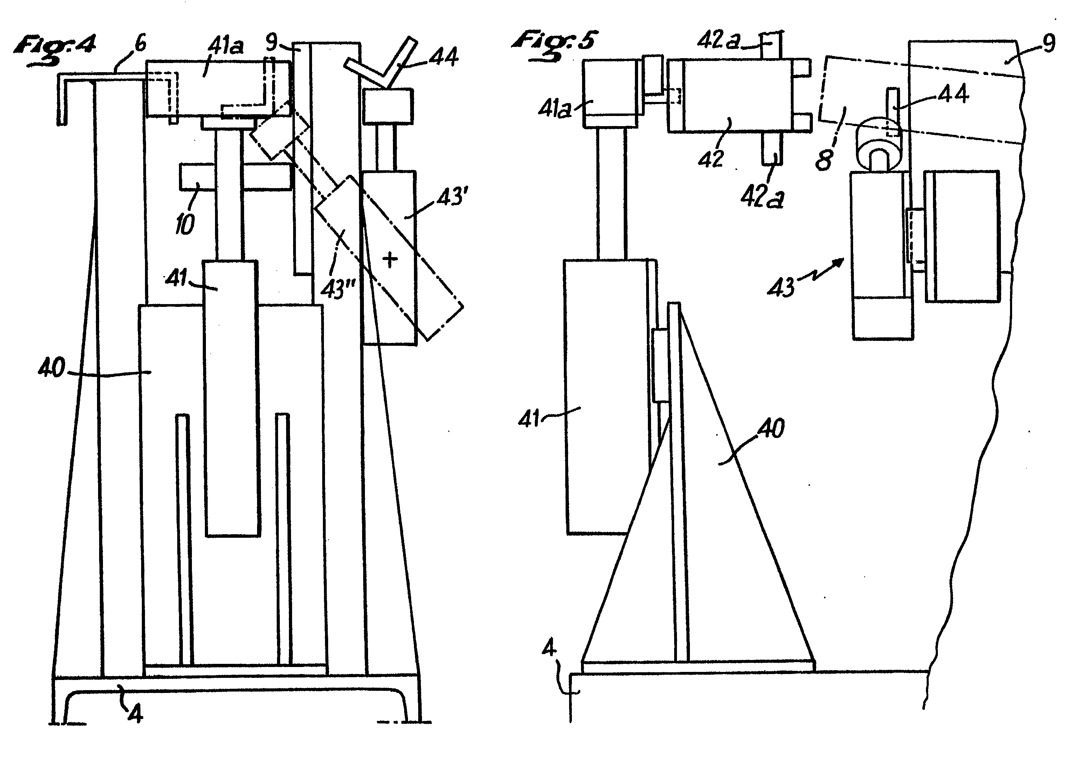

Les figures 4 et 5 enfin, illustrent également schématiquement un dispositif permettant le retournement ou la rotation de la pièce à usiner 8. On retrouve sur ces figures certains des éléments déjà décrits avec les mêmes références. Ainsi le chariot 4 porte à l'une de ses extrémités (celle mentionnée 4b sur la figure 1) une console 40 de fixation d'un dispositif élévateur 41 (par exemple un vérin à vis ou pneumatique, ou hydraulique) équipé à son extrémité libre 41a d'une pince 42 à axe horizontal et pouvant pivoter autour de cet axe au moyen d'un dispositif moteur connu en lui-même. A son extrémité voisine de la table 10, cette pince possède des mâchoires 42a pouvant s'ouvrir à 180° et se refermer sur une extrémité de la pièce 8 à usiner débordant légèrement de la table 10, lorsque cette extrémité se trouve en regard de l'axe de la pince. Par ailleurs, un support auxiliaire escamotable 43 est monté pivotant sur la superstructure du chariot 4 du côté de la paroi verticale 9 de manière à pouvoir prendre deux positions, l'une 43' (figure 4 ) dans laquelle il est au-delà de la paroi 9 par rapport à la table 10 et l'autre 43" (figure 4 en pointillé) dans laquelle son extrémité se trouve sensiblement en regard de la pince 42 dans sa position haute, c'est-à-dire au niveau de la table 10 dans sa position de travail. Ce support auxiliaire 43 peut être du type à vérin avec, en extrémité de tige, une équerre 44 par laquelle est prise en charge et mise en position la pièce 8.

Le fonctionnement de la machine s'opère de la manière suivante. Le chariot 2 est au départ à l'extrémité de gauche (figure 1) du banc 1b. La table 10 est dans sa position haute à un niveau correspondant aux dimensions de la pièce à usiner. Le chariot inférieur 4 est dans une position telle qu'il est dégagé de l'outil latéralement. L'opérateur place la pièce sur la table qui est ensuite serrée par les vérins 7 contre la paroi verticale 9. La commande des vérins peut être assurée par l'opérateur ou par l'activation d'un contacteur approprié détecteur de la présence de la pièce. Le chariot 4 est ensuite déplacé transversalement pour prendre la position désirée par rapport à l'outil 3. La pince 42 est escamotée à son niveau inférieur, c'est-à-dire en dessous du niveau de la table, tandis que le support auxiliaire 43 est dans sa position de repos derrière le plan vertical de la paroi 9.

La course de travail du chariot 2 est alors commandée. Après cette première passe, les vérins 7 sont desserrés et le dispositif 43 bascule pour se placer dans sa position 43" éloignant ainsi l'extrémité de la pièce 8 de la paroi verticale 9.Ensuite , la table 10 descend alors que la pièce 42 monte pour se placer en face de l'extrémité de la pièce 8 qui est alors soutenue par le dispositif 43. Les mâchoires 42a se referment sur la pièce et le dispositif 43 revenant à sa position 43' la pince 42 est tournée de 90° (par exemple) du côté de la paroi 9, autour de son axe longitudinal. Les mâchoires 42a s'ouvrent alors et la pièce de bois libérée tombe sur la table 10 située en dessous. Le chariot 2 revient à sa position initiale pendant que la table 10 monte. Les vérins 7 bloquent la pièce fermement contre la paroi 9. Le chariot 4 est déplacé le long de ses guides 5a et 5b pour placer la pièce en regard de la partie d'outil 3 choisie. Le chariot 2 effectue alors le second usinage. Le chariot 4 est alors translaté sur le côté pour dégager la pièce et, les vérins 7 relachés, permettre son évacuation et le chargement d'une nouvelle pièce.

Le fonctionnement du cycle décrit peut être réalisé de manière automatique en associant avec différents organes moteurs des capteurs reliés à un automate programmable de commande ou un dispositif à commande numérique.

L'invention trouve une application intéressante dans le domaine de l'industrie du bois.

## Revendications

1. Machine à bois comportant :
   - un outil d'usinage (3) rotatif autour d'un axe parallèle à une table (10) de support de la pièce (8) à usiner, la pièce et l'outil étant animés d'un mouvement relatif sensiblement perpendiculaire à l'axe susdit ,
   - un bâti fixe (1, 1a, 1b),
   - un premier chariot (2) supérieur monté à coulissement sur des guides (1b) du bâti parallèle à une première direction longitudinale horizontale et équipé sur sa face inférieure de l'outil (3) susdit,
   - des moyens (11, 12, 15) de réglage de l'écartement vertical de la table (10) par rapport à l'outil,
   - des moyens de fixation (7) d'une pièce (8) de bois sur la surface supérieure de la table (10),
   - des moyens d'entraînement de l'outil (3) embarqués sur le premier chariot (2),
   caractérisée en ce que ladite table (10) est portée par la partie supérieure d'un second chariot (4) inférieur coopérant avec des moyens d'entraînement du déplacement dudit second chariot (4) par rapport au bâti (1), le long de guides (5a, 5b) parallèles à une seconde direction transversale horizontale et en ce que les moyens de réglage susdits sont constitués par deux coulisseaux (11, 12) montés glissant sur des guides inférieurs (13, 14) du second chariot (4) parallèles à la direction longitudinale susdite et possédant chacun une face supérieure (13a, 14a) inclinée coopérant avec l'un des côtés (15a, 15b) d'une pièce (15) en V solidaire de la table (10), et par deux vis (21,25) symétriques parallèles aux guides (13, 14) susdits, formant les arbres de sortie opposés d'un renvoi d'angle (24) central dont l'arbre d'entrée est perpendiculaire auxdits guides, chacune de ces vis (21, 25) coopérant avec le coulisseau (12, 11) correspondant, à la manière d'un système vis-écrou pour éloigner ou rapprocher l'un ou l'autre desdits coulisseaux le long des guides.

2. Machine selon la revendication 1 caractérisée en ce que le déplacement du chariot inférieur (4) par rapport au bâti (1) est assuré par une vis fixe (30) en translation, parallèle aux guides transversaux (5a, 5b) susdits, coopérant avec le chariot (4) inférieur à la manière d'un système vis-écrou.

3. Machine selon l'une quelconque des revendications précédentes caractérisée en ce que l'entraînement du chariot supérieur (2) le long de ses guides (1b) est assuré par un pignon solidaire du chariot (2) et entraîné par un moteur embarqué, engrenant avec une crémaillère fixe parallèle aux guides longitudinaux.

4. Machine selon l'une quelconque des revendications précédentes, caractérisée en ce que le second chariot (4) comporte une paroi verticale fixe (9), adjacente à ladite table (10), de hauteur supérieure à l'amplitude du mouvement vertical de la table (10) et de longueur égale à celle de la table, à l'extrémité duquel est prévu un dispositif auxiliaire (43) de soutien de la pièce à usiner, escamotable entre une position de repos (43) située au-delà de la surface verticale utile de la paroi (9) par rapport à la table et une position de travail (43″) dans laquelle le support maintient une extrémité débordante de la pièce (8) de bois écartée de ladite paroi fixe (9).

5. Machine selon la revendication 4 caractérisée en ce que le second chariot (4) comporte une console (40) de support d'une pince (42) rotative autour d'un axe longitudinal et mobile entre une position basse inférieure à la surface de la table (10) en position haute et une position de travail au niveau de l'extrémité de la pièce de bois soutenue par le dispositif auxiliaire de support (43).

6. Machine selon la revendication 5 caractérisée en ce que les mâchoires (42a̲) de la pince sont, en position ouverte, dans le prolongement l'une de l'autre.

7. Machine selon l'une quelconque des revendications 4 à 6 caractérisée en ce que les moyens de fixation de la pièce (8) à usiner sur la table (10) sont constitués par des vérins (7) orientés perpendiculairement à ladite paroi verticale fixe (9) du second chariot (4).

## Claims

1. A woodworking machine comprising:
- a machining tool (3) which is rotatable about an axis parallel to a table (10) for supporting the piece (8) to be machined, the piece and the tool being displaced with a relative movement substantially perpendicular to said axis,
- a fixed frame structure (1, 1a, 1b),
- a first upper carriage (2) mounted slidably on guides (1b) of the frame structure parallel to a first longitudinal horizontal direction and provided on its lower face with said tool (3),
- means (11, 12, 15) for adjusting the vertical spacing of the table (10) with respect to the tool,
- means (7) for fixing a piece of wood (8) on the upper surface of the table (10), and
- means for entrainment of the tool (3), which are carried on the first carriage (2),
characterised in that said table (10) is carried by the upper part of a second lower carriage (4) co-operating with means for entrainment of the displacement of said second carriage (4) with respect to the frame structure (1) along guides (5a, 5b) which are parallel to a second transverse horizontal direction and that said adjusting means comprise two sliders (11, 12) mounted slidably on lower guides (13, 14) of the second carriage (4) which are parallel to said longitudinal direction and each having an upper inclined face (13a, 14a) co-operating with one of the sides (15a, 15b) of a V-shaped portion (15) which is fixed with respect to the table (10), and two symmetrical screws (21, 25) which are parallel to said guides (13, 14), forming the opposite output shafts of a central bevel gear unit (24), the input shaft of which is perpendicular to said guides, each of said screws (21, 25) co-operating with the corresponding slider (12, 11) in the manner of a screw-and-nut system to move one or other of said sliders apart or together along the guides.

2. A machine according to claim 1 characterised in that displacement of the lower carriage (4) with respect to the frame structure (1) is produced by a screw (30) which is fixed in respect of translation and which is parallel to said transverse guides (5a, 5b), co-operating with the lower carriage (4) in the manner of a screw-and-nut system.

3. A machine according to either one of the preceding claims characterised in that entrainment of the upper carriage (2) along its guides (1b) is produced by a pinion which is fixed with respect to the carriage (2) and which is driven by a motor carried thereon, meshing with a fixed rack parallel to the longitudinal guides.

4. A machine according to any one of the preceding claims characterised in that the second carriage (4) comprises a fixed vertical wall (9) adjacent to said table (10) of a height greater than the amplitude of the vertical movement of the table (10) and of a length equal to that of the table, at the end of which is provided an auxiliary device (43) for supporting the piece to be machined, being retractable between a rest position (43) beyond the vertical useful surface of the wall (9) with respect to the table and a working position (43″) in which the support maintains a projecting end of the piece (8) of wood spaced from said fixed wall (9).

5. A machine according to claim 4 characterised in that the second carriage (4) comprises a bracket (40) for supporting a gripping means (42) rotatable about a longitudinal axis and movable between a down position which is lower than the surface of the table (10) in the up position and a working position at the level of the end of the piece of wood supported by the auxiliary support device (43).

6. A machine according to claim 5 characterised in that the jaws (42a) of the gripping means are disposed in alignment with each other in the open position.

7. A machine according to any one of claims 4 to 6 characterised in that the means for fixing the piece (8) to be machined on the table (10) are formed by jacks (7) which are oriented perpendicularly to said fixed vertical wall (9) of the second carriage (4).

## Patentansprüche

1. Holzbearbeitungsmaschine mit
- einem Spanwerkzeug (3), das um eine zu einem Auflagetisch (10) für das zu bearbeitende Werkstück (8) parallele Achse drehbar ist, wobei das Werkzeug und das Werkstück in Bezug auf diese Achse etwa senkrecht bewegbar sind,
- einem feststehenden Rahmen (1, 1a, 1b),
- einem ersten oberen Schlitten (2) der auf parallelen Führungen (1b) des Rahmens in einer ersten horizontalen Längsrichtung gleitbar angeordnet und auf seiner Unterseite mit dem Spanwerkzeug (3) versehen ist,
- einer Einstelleinrichtung (11, 12, 15) für den Vertikalabstand des Auflagetisches (10) vom Spanwerkzeug,
- Befestigungsvorrichtungen (7) für ein Werkstück aus Holz auf dem Auflagetisch (10) und

– mit einer am ersten Schlitten (2) vorgesehenen Antriebseinrichtung für das Spanwerkzeug (3),
dadurch gekennzeichnet, daß der Auflagetisch (10) vom Oberteil eines zweiten unteren Schlittens (4) getragen wird, der mit einer Antriebseinrichtung zu seiner Verschiebung in bezug auf den Rahmen (1) längs paralleler Führungen (5a, 5b) in einer zweiten horizontalen Querrichtung zusammenarbeitet, und daß die Einstelleinrichtung zwei gleitend auf den unteren Führungen (13, 14) des zweiten Schlittens (14) parallel zur genannten Längsrichtung angeordnete Gleitstücke (11, 12 ), von denen jedes eine mit einer der Seiten (15a, 15b) eines mit dem Auflagetisch (10) fest verbundenen V-förmigen Elementes (15) zusammenwirkende geneigte Oberseite (13a, 14a) besitzt, sowie zwei symmetrisch zu den Führungen (13, 14) parallele Schrauben (21, 25)) umfaßt, die die gegenüberliegenden Abtriebswellen eines zentralen Winkelgetriebes (24) bilden, dessen Antriebswelle senkrecht zu diesen Führungen verläuft, wobei jede der Schrauben (21, 25) mit dem zugehörigen Gleitstück (11, 12) in der Weise eines Schraube-Mutter-Systems zusammenwirkt, um das eine oder andere dieser Gleitstücke entlang der Führungen aufeinander zu- oder voneinander weg zu bewegen.

2. Maschine nach Anspruch 1, dadurch gekennzeichnet, daß das Verschieben des unteren Schlittens (4) in bezug auf den Rahmen (1) mit einer in Achsrichtung ortsfesten, zu den Querführungen (5a, 5b) parallelen Schraube (30) erfolgt, die mit dem unteren Schlitten in der Weise eines Schraube-Mutter-Systems zusammen wirkt.

3. Maschine nach einem der vorhergehenden Ansprüche, dadurch gekennzeichnet, daß das Verschieben des oberen Schlittens (2) entlang seiner Führungen (1b) durch ein am Schlitten (2) befestigtes sowie von einem am Schlitten (2) gehaltenen Motor angetriebenes Ritzel erfolgt, das mit einer feststehenden, zu den Längsführungen parallelen Zahnstange im Eingriff ist.

4. Maschine nach einem der vorhergehenden Ansprüche, dadurch gekennzeichnet, daß der zweite Schlitten (4) eine vertikal befestigte, an den Auflagetisch (10) angrenzende Wand (9) aufweist, die eine der Amplitude der Vertikalbewegung des Tisches (10) übersteigende Höhe sowie eine mit der Länge des Tisches (10) übereinstimmende Länge hat und an deren Rand zum Abstützen des Werkstückes ein Hilfsmittel (43) angeordnet ist, das zwischen einer Ruhelage (43') jenseits der vertikalen Nutzfläche der Wand (9) in bezug auf den Tisch und einer Arbeitsstellung (43") schwenkbar ist, in der die Stütze ein überstehendes Ende des Holzstückes (8) von der feststehenden Wand (9) entfernt hält.

5. Maschine nach Anspruch 4, dadurch gekennzeichnet, daß der zweite Schlitten (4) eine Stützkonsole (40) für ein Spannelement (42) aufweist, das um eine Längsachse drehbar und zwischen einer Stellung tief unterhalb der Oberfläche des Tisches (10) in Hochlage und einer Arbeitsstellung auf dem Niveau des Endes des Holzstückes bewegbar ist, das von der Hilfsstütze (43) gehalten wird.

6. Maschine nach Anspruch 5, dadurch gekennzeichnet, daß die Spannbacken (42a) des Spannelementes (42) in der Offenstellung untereinander in Verlängerung sind.

7. Maschine nach einem der Ansprüche 4 bis 6, dadurch gekennzeichnet, daß die Befestigungsvorrichtungen für das Werkstück (8) auf dem Auflagetisch (10) von Spannböcken (7) gebildet werden, die senkrecht zur vertikalen, feststehenden Wand (9) des zweiten Schlittens (4) ausgerichtet sind.

Fig.1

Fig. 2

EP 0 252 802 B1

## Fig. 3